# EUROPÄISCHE PATENTSCHRIFT

(11) **EP 1 388 194 B1**
(45) Veröffentlichungstag und Bekanntmachung des Hinweises auf die Patenterteilung: **17.01.2007**
(21) Anmeldenummer: 01940503.4
(22) Anmeldetag: 18.05.2001
(51) Int. Cl.: H02K 5/02, H02K 5/08, H02K 7/102, H02K 7/08, H02K 5/173, B66B 11/04

(54) **AUFZUGANTRIEB MIT TRAGENDEN KUNSTSTOFFTEILEN**
ELEVATOR DRIVE WITH PLASTIC SUPPORTING PIECES
ENTRAINEMENT POUR ASCENSEUR PRESENTANT DES PIECES PORTEUSES EN MATIERE PLASTIQUE

(43) Veröffentlichungstag der Anmeldung: 11.02.2004
(73) Patentinhaber: ThyssenKrupp Aufzugswerke GmbH, 73765 Neuhausen (DE)
(72) Erfinder: HAHN, Wolfgang, 34125 Kassel (DE); BUGIEL, Peter, 34277 Fuldabrück (DE); HERRMANN, Günther, 73669 Lichtenwald (DE); VOGLER, Eberhard, 73765 Neuhausen a.d.F. (DE)
(74) Vertreter: Kudlek, Franz Thomas
(86) Internationale Anmeldenummer: PCT/EP2001/005745
(87) Internationale Veröffentlichungsnummer: WO 2002/103883

(56) Entgegenhaltungen:
- EP-A- 0 841 283
- EP-A- 1 069 068
- EP-A- 1 092 876
- US-A- 3 758 799
- US-A- 5 982 060

## Beschreibung

Die vorliegende Erfindung betrifft einen Aufzugantrieb nach dem Oberbegriff des Patentanspruchs 1.

Aufzugantriebe mit elektrischen Maschinen sind an sich bekannt. Sie erhalten ihre Energie aus einer äußeren Stromversorgung, wobei der Strom in dem Rotor und dem Stator der jeweils verwendeten elektrischen Maschine Magnetfelder erzeugt, die sich abstoßen oder anziehen und den Rotor in Drehung versetzen. Es ist auch möglich, Rotor oder Stator permanentmagnetisch auszubilden.

Aus der EP 1069068 A1 ist eine Antriebseinheit für einen Aufzug bekannt. Diese Antriebseinheit besteht aus einem Antrieb und einer Treibscheibe, wobei der Antrieb ein Gehäuse und einen Motor mit Stator und Rotor aufweist. Eine am Gehäuse gelagerte Welle überträgt die Rotationsbewegungen des Rotors auf die Treibscheibe.

Aus der EP 0841283. A1 ist eine Aufzugsanlage mit im Aufzugsschacht angeordneter Antriebseinheit bekannt. Die Antriebseinheit besteht aus einem ringförmigen Motor, einer Bremseinheit, einem Drehgeber und einem Gestell. An der Innenwand des Gestells ist ein ringförmiger Ständer des Motors angeordnet. Rotor und Treibscheibe bilden eine rotierende Einheit. Blechpakete mit Permanentmagneten des Rotors sind mit Haltern verspannt.

- Die US 5,982,060 beschreibt einen Aufzugsantrieb, wobei eine Statorscheibe des Antriebs mit einem ringförmigen Hohlraum vorgesehen ist, in welchem der Stator eingebracht ist. Der Stator ist auf einer der Wände des Hohlraums befestigt. Ein Rotor ist auf einer Rotorscheibe angebracht. Zwischen den Wänden des Hohlraums und der Rotorscheibe ist eine Abdichtung vorgesehen, welche den Hohlraum abdichtet. Die Abdichtung verhindert den Kontakt von Rotor und Stator mit äußeren Partikeln.

Aus der EP 1092876 A2 ist ein Gebläse für einen Kühlschrank bekannt, bei dem Statorkomponenten teilweise in einem Kunststoffgehäuse positioniert sind. Diese Druckschrift bezieht sich nicht auf Aufzuganlagen bzw. einem Aufzugantrieb.

Schließlich ist aus der US 3,758,799 eine dynamoelektrische Maschine bekannt, bei der eine stationäre Verbundstruktur Gehäusemittel in Form eines Gemisches aus Inertpartikelmaterial, beispielsweise Sand, und einem Klebstoff, umfasst. Auch diese Druckschrift betrifft nicht das Gebiet der Aufzugantriebe.

Aus der DE 199 02 837 C1 ist eine elektrische Maschine bekannt, bei welcher zwischen den Wickelköpfen des Stators und einem Stator-Tragkörper aus einer gut wärmeleitenden Legierung, z. B. einer Bronze-Legierung, ein Gießharzkörper als Teil einer Wärmebrücke vorgesehen ist. Der Gießharzkörper ist mit einem gut wärmeleitenden Pulver gefüllt und erfüllt hierbei ausschließlich Wärmeleitungsfunktionen.

Elektrische Maschinen sind als Außenläufermaschinen oder Innenläufermaschinen ausführbar.

Herkömmlicherweise besteht ein Stator aus einem Blechpaket, das in einem Gehäuse z. B. aus Gussmetall gefaßt ist, wobei das Blechpaket mit Spulen bewickelt ist. Zur Vermeidung von höheren Stromverlusten werden die Bleche des Blechpakets geschichtet angeordnet. Bei der Herstellung wird das geschichtete Blechpaket zur Fixierung und Isolierung der Wicklungsdrähte imprägniert. Hierzu werden bei dem Blechpaket z. b. in einer Vakuumtränkanlage alle Hohlräume mit dem Imprägniermittel verschlossen und gleichzeitig wird auf der Oberfläche eine dünne Isolierschicht aufgebracht. Das so behandelte Blechpaket härtet anschließend, im allgemeinen in einem Ofen, aus.

Ein permanentmagnetischer Rotor weist typischerweise einen Metallkörper mit einem mittig ausgebildeten Durchgangsloch auf, durch welches die Welle der Maschine durchführbar ist. Auf den Metallkörper werden herkömmlicherweise durch Verkleben Permanentmagnete aufgebracht. Aufgrund der unterschiedlichen Eigenschaften der Werkstoffe und der Beanspruchungen während des Betriebes werden hohe Ansprüche an den Kleber und dessen Verarbeitung gestellt.

Kleber, welche entsprechende Eigenschaften aufweisen, sind relativ teuer. Ferner ist das Aufbringen durch Kleben der Permanentmagnete auf den Metallkörper sehr zeitaufwendig und somit kostenintensiv.

Auch erweist sich bei derart ausgebildeten Rotoren der Korrosionsschutz als sehr problematisch, dies insbesondere auch aufgrund der relativ großen Affinität der verwendeten Magnetmaterialien zu Sauerstoff, so daß sie ebenfalls mit Imprägnierung oder Lackierung als Korrosionsschutz behandelt werden müssen.

Aufgabe der Erfindung ist eine Vereinfachung und somit eine Kostenreduzierung und eine Gewichtsreduzierung bei der Herstellung von Aufzugantrieben.

Diese Aufgabe wird gelöst durch einen Aufzugantrieb mit den Merkmalen des Patentanspruchs 1.

Erfindungsgemäß weist der Aufzugantrieb eine mit dem Rotor in drehfester Wirkverbindung stehende Treibscheibe auf. Hierbei erweist es sich als zweckmäßig, die Treibscheibe axial versetzt neben Rotor und Stator auszubilden. Dabei ist es besonders günstig, die dem Aufzugantrieb zugeordnete Bremse innerhalb der Treibscheibe unterzubringen.

Durch die erfindungsgemäße Anordnung bzw. Fixierung der einzelnen elektro- oder permanentmagnetischen Funktionselemente von Stator und/oder Rotor in Kunststoffteilen kann die Herstellung derartiger Aufzugsantriebe gegenüber herkömmlichen Lösungen vereinfacht werden. Es ist beispielsweise keine mechanische Vor- und/oder Nachbearbeitung von Bauteilen notwendig, wie dies z. B. bei der Verwendung von Metallteilen der Fall ist. Auch komplexe Formgebungen von Rotor und/oder Stator z. B. auch im äußeren Oberflächenbereich sind durch Bereitstellung entsprechender Werkzeuge in einfacher Weise realisierbar. Hierdurch ist eine Produktion mit höherem Automatisierungsgrad erreichbar.

Die Herstellung der Kunststoffteile kann bevorzugt durch irgendeine Art von Kunststoffgießen erfolgen, wie z. B. durch Spritz-, Vakuum- oder Schleudergießen oder durch eine andere geeignete Kunststoffverarbeitungstechnik.

Gegenüber herkömmlichen Aufzugsantrieben weist der erfindungsgemäße Antrieb ein geringeres Gewicht auf, wodurch beispielsweise bei der Befestigung eines erfindungsgemäßen Antriebs an einem Rahmen ein geringerer Aufwand erforderlich ist und wodurch Transport und Montage erleichtert werden.

Als besonders vorteilhaft bei dem erfindungsgemäßen Antrieb erweist sich, daß auf das aufwendige und risikobehaftete Kleben von Magneten auf den Rotorkörper verzichtet werden kann. Gleichzeitig ist ein Korrosionsschutz der Magnete gewährleistet, da diese vollständig in den Kunststoff bzw. das Kunstharz des Rotorkörpers einschließbar sind. Deshalb braucht keine Korrosionsschutzlackierung mehr wie beim heutigen Stand der Technik aufgebracht werden.

Beim Stator ist ferner keine Imprägnierung mehr notwendig, da die notwendige bzw. wünschenswerte Isolierung in erheblich einfacherer Weise als bisher, z. B. beim Spritzgießen, zu verwirklichen ist.

Dazu kann auch meistens auf eine End-Farblackierung nach Kundenwunsch oder zur Werbung verzichtet werden, da die Kunststoffteile von Stator und/oder Rotor schon aus farbigem Kunststoff herstellbar sind, anders als bei der Herstellung aus Metall. Ebenso kann die Wärmeabstrahlung entweder an einzelnen Stellen oder der ganzen Maschine durch eine entsprechende Kunststofffarbe verbessert werden. Als weitere Vorteile sind anzuführen eine geringere Geräuschentwicklung durch dämmende Eigenschaften des für den Rotorkörper bzw. das Statorgehäuse verwendeten Kunststoffes sowie ein kleinerer Bauraum.

Es sei angemerkt, daß die verwendete elektrische Maschine sowohl als Innenläufer als auch als Außenläufer, realisierbar ist.

Vorteilhafte Ausgestaltungen des erfindungsgemäßen Aufzugantriebs sind Gegenstand der Unteransprüche.

Gemäß einer bevorzugten Ausgestaltung des erfindungsgemäßen Antriebs weist der Stator als Funktionselement ein Blechpaket und Wicklungen auf, welche in ein als Statorgehäuse dienendes Kunststoffteil eingebettet sind. Alternativ oder zusätzlich hierzu ist es möglich, daß der Rotor Permanentmagnete und einen Magnetrückschlußring aufweist, welche in ein als Rotorkörper dienendes Kunststoffteil eingebettet sind.

Zweckmäßigerweise weist der erfindungsgemäße Antrieb insbesondere an Stellen mit hoher Beanspruchung in die Kunststoffteile eingelegte Zusatzteile auf. Derartige Einlegeteile können zur Verstärkung der Kunststoffteile dienen und aus geeigneten Materialien, beispielsweise einem Metall, oder anderem Kunststoff, z. B. auch faserverstärkt, hergestellt sein.

Es erweist sich als vorteilhaft, daß in einfacher Weise Mittel zur EMV-Abschirmung in die Kunststoffteile einbringbar sind. Als Mittel zur EMV-Abschirmung sind beispielsweise metallische Folien oder Netze denkbar.

Gemäß einer weiteren bevorzugten Ausführungsform des erfindungsgemäßen Antriebs weist dieser Mittel zu seiner seitlichen Aufhängung, insbesondere an einem Rahmen auf. Hierdurch ist eine besonders einfache Anbringung der Maschine in einem Aufzugschacht möglich.

Zweckmäßigerweise sind die tragenden Teile des erfindungsgemäßen Antriebs, beispielsweise eine Trageplatte, eine Tragachse, Lager, insbesondere ein Hauptlager, oder auch die Treibscheibe, im wesentlichen aus Metall, und Antriebsteile, insbesondere Rotor und Stator, im wesentlichen aus Kunststoff hergestellt. Die Metallteile übernehmen hierbei hauptsächlich die an der Treibscheibe auftretenden Kräfte, die Kunststoffteile tragen dagegen nur einen kleinen Teil der an der Treibscheibe angehängten Lasten. Mit dieser Materialwahl ist ein gegenüber herkömmlichen Antrieben bzw. elektrischen Maschinen wesentlich leichter bauendes Aggregat zur Verfügung gestellt. Eine einseitige Aufhängung ist dadurch erleichtert, daß insbesondere die Treibscheibe, die auch noch über die Tragmittel belastet wird, unmittelbar an der Aufhängung, und die relativ leichten, mit viel Kunststoff hergestellten Antriebsteile, d.h. Rotor und Stator, mit größerem axialen Abstand von der Aufhängung positionierbar sind, wodurch an der Aufhängung angreifende Momente deutlich reduzierbar sind.

Es erweist sich ferner als vorteilhaft, eine an den Antrieb angebundene und/oder in die Kunststoffteile integrierte Leistungselektronik und/oder Abtaktwiderstände vorzusehen. Mit dieser Maßnahme ist insbesondere ein kompletter Maschinenantrieb in einfacher Weise realisierbar.

Zweckmäßigerweise ist die Treibscheibe direkt benachbart an der Trägerplatte angeordnet und über Lager und die Tragachse abgestützt.

Es ist vorteilhaft, daß der Stator durch die Treibscheibe beabstandet über eine drehmomentfeste Abstützung mit der Trägerplatte verbunden ist.

Es erweist sich als besonders vorteilhaft, den Stator über den Rotor zu schieben und über Stützelemente, die die Treibscheibe übergreifen, an der Trägerplatte zu befestigen. Mit dieser Ausgestaltung ist eine besonders robuste und zuverlässige Ausführungsform des erfindungsgemäßen Aufzugantriebs realisierbar.

Zweckmäßigerweise ist eine Bremse innerhalb der Treibscheibe angeordnet, welche sich insbesondere an der Trägerplatte oder der Tragachse abstützt. Mit dieser Maßnahme ist eine Integration einer Bremse in einfacher und platzsparender Weise realisierbar.

Gemäß einer bevorzugten Ausführungsform des erfindungsgemäßen Antriebs sind Mittel zur Fixierung von Rotor und Stator vorgesehen, um ihn problemlos transportieren und einfacher montieren zu können. Durch die Fixierung werden Rotor und Stator nicht durch die Permanentmagnete gegeneinander gezogen, wodurch ein einfaches Handling der Teile und ein Schutz der spröden Magnete gewährleistet wird. Um beispielsweise beim Transport des Antriebs oder bei der Montage von Antrieb oder Bremse bei fehlender Befestigung des Stators an der Trägerplatte Beschädigungen von Rotor und Stator zu vermeiden, können für diesen Fall insbesondere Rotor und Stator über Gewindehülsen mit Schrauben zueinander fixiert werden.

Zweckmäßigerweise ist der Stator mit einem Ende über Stützelemente an der Trägerplatte beabstandet abgestützt, wobei er mit seinem freien Ende den Rotor abstützt und führt.

Eine besonders bevorzugte Ausführungsform des erfindungsgemäßen Aufzugantriebs wird nun anhand der beigefügten Zeichnungen näher erläutert. In dieser zeigt
- Figur 1: eine perspektivische Ansicht einer bevorzugten Ausführungsform des erfindungsgemäßen Aufzugantiebs, und
- Figur 2: eine Schnittansicht des in Figur 1 dargestellten Aufzugantriebs.

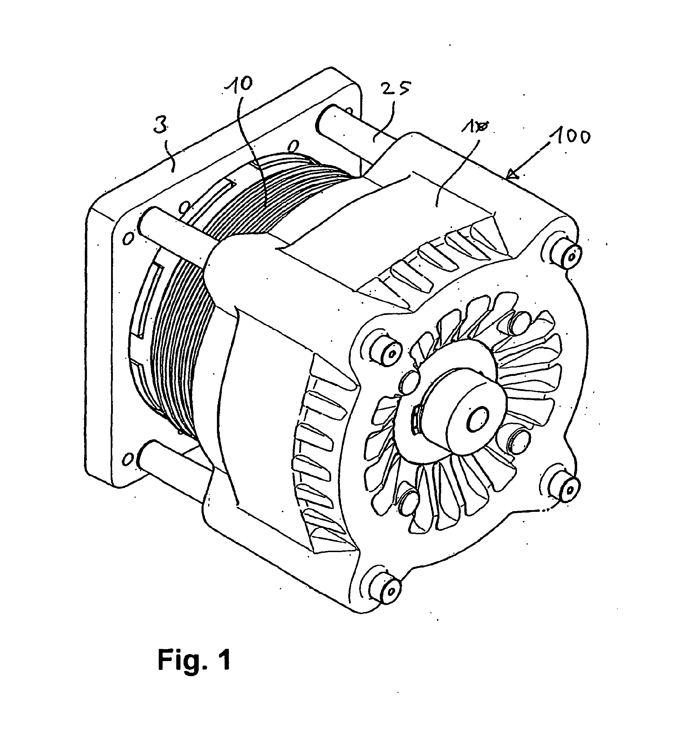

In Figur 1 ist eine bevorzugte Ausführungsform des erfindungsgemäßen Aufzugsantriebs in perspektivischer Ansicht dargestellt. Die dargestellte elektrische Maschine des Antriebs ist als Innenläufer ausgebildet, wobei noch einmal betont sei, daß der erfindungsgemäße Antrieb auch mit einem Außenläufer realisiert sein kann.

Mit 1 ist ein Statorgehäuse eines Stators bezeichnet, welches als Kunststoffgussteil ausgeführt ist. Das Gehäuse 1 ist mittels Stützelementen 25 und Schrauben 26 an einer Trägerplatte 3 fixiert. Die Stützelemente 25 können teilweise gleich in das Gehäuse 1 eingegossen sein und/oder auch mit Schrauben an dem Gehäuse 1 befestigt sein. Zwischen Trägerplatte 3 und Gehäuse 1 ist eine Treibscheibe 10 angeordnet, welche mittels eines in dem Gehäuse 1 vorgesehenen Rotors angetrieben wird. Zum Antrieb eines Aufzuges wird durch die Treibscheibe ein hier nicht gezeigtes Tragmittel, z. B. Seil oder Band, angetrieben.

Die Trägerplatte 3 ist beispielsweise in einem Aufzugschacht oder einer Förderanlage an einem geeigneten Rahmen bzw. Stahlträger befestigbar, z. B. über die Bohrungen.

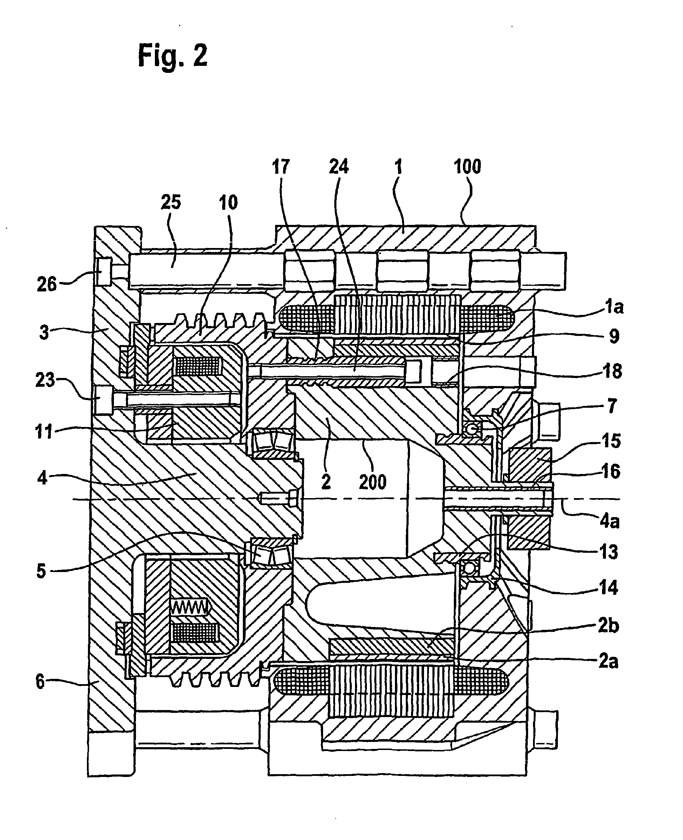

Die Ausführungsform des erfindungsgemäßen Aufzugantriebs Figur 1 ist in Figur 2 in einer Schnittansicht dargestellt.

Man erkennt zunächst, daß der insgesamt mit 100 bezeichnete Stator ein in seinem Gehäuse 1 eingegossenes Blechpaket 1a mit darauf angebrachten Wicklungen aufweist.

Der Stator 100 steht über Luftspalt 9 in Wirkverbindung mit dem Rotor, hier.insgesamt mit 200 bezeichnet. Der Rotor 200 weist einen Rotorkörper 2 aus Kunststoffguß auf, in welchen Permanentmagnete 2a und deren Magnetrückschlußring 2b vollständig eingegossen sind. Die Permanentmagnete 2a wirken in bekannter Weise mit dem Blechpaket bzw. den Windungen 1a des Stators 1 zusammen, um eine Rotationsbewegung des Rotors 200 um eine Drehachse 4a zu erzeugen. Das vollständige Eingießen der Magnete 2a stellt einen besonders wirksamen Korrosionsschutz dar.

Der Rotor 200 ist drehfest mit der Treibscheibe 10 verbunden, wobei diese drehfeste Verbindung beispielsweise mittels einer Schraubverbindung 24 realisierbar ist. Diese Verbindung ist jedoch auch sehr einfach formschlüssig zu gestalten, wobei der Rotor an die Treibscheibe angegossen werden kann. Die Drehung des Rotors 200 bzw. der Treibscheibe 10 erfolgt unter Verwendung herkömmlicher Lager, wobei in der vorliegenden Ausführungsform ein Hauptlager mit 5, und ein weiteres Lager mit 7 bezeichnet ist. Die Treibscheibe 10 ist über das Hauptlager 5 auf der Tragachse 4 gelagert, die fest mit der Trägerplatte 3 zur Aufhängung 6 verbunden ist. Statt einteilig können Trägerplatte 3 und Tragachse 4 auch mehrteilig sein.

Der dargestellte Antrieb ist ferner mit einer Bremse ausgebildet, welche innerhalb der Treibscheibe angeordnet und insgesamt mit 11 bezeichnet ist. Die Bremse 11 ist beispielsweise mittels Befestigungsschrauben 23 an der Trägerplatte 3 befestigt. Sie kann jedoch auch auf der Tragachse 4 befestigt sein. Über die Bremse 11 wird die Treibscheibe 10 über ihren Steg oder den Treibscheibenkranz von innen her abgebremst. An dem der Treibscheibe gegenüberliegenden Ende des Rotors ist im Bereich der Drehachse 4a ein Geber 15 angeordnet, über welchen die Drehzahl des Rotors 200 feststellbar ist.

Man erkennt auf dem Umfang der Treibscheibe 10 Nuten, in welche z. B. Tragseile des Aufzugantriebes einbringbar sind.

Der dargestellte Aufzugantrieb ist mittels entsprechender Befestigung der Trägerplatte 3 seitlich an einem geeigneten (nicht dargestellten) Rahmen oder einer Wand aufhängbar. Hierbei bestehen die tragenden Teile, insbesondere die Trägerplatte 3, die Tragachse und die Stützelemente, oder auch die Treibscheibe 10, im wesentlichen aus Metall bzw. Stahl, und wesentliche Antriebsteile, insbesondere das Gehäuse 1 des Stators 100 bzw. der Rotorkörper 2 aus Kunststoff. Es können aber auch Teile wie z. B. die Treibscheibe, die Tragachse und die Stützelemente aus Kunststoff, insbesondere aus verstärktem oder gewickeltem Kunststoff, bestehen. Hierdurch ist das Gewicht der Maschine bzw. Aufzugantriebs gegenüber herkömmlichen Maschinen bzw. herkömmlichen Aufzugantrieben noch weiter verringerbar. In diesem Zusammenhang erweist sich als vorteilhaft, daß die relativ stark belasteten Teile unmittelbar an der Trägerplatte, und die weniger belasteten Kunststoffteile in größer Entfernung von der Trägerplatte angeordnet sind. Hierdurch lassen sich auf die Trägerplatte 3 bzw. die Aufhängung einwirkende Momente reduzieren, so daß beispielsweise die Trägerplatte 3 relativ klein dimensionierbar ist.

In das Gehäuse 1 sowie den Rotorkörper 2 können an verschiedenen Stellen Einlegeteile mit eingegossen werden als Verstärkung, so z. B. Lagerhülsen 13 am Rotor und Lagerhülse 14 am Gehäuse für das Lager 7 und eine Hülse 16 im Drehachsenbereich 4a für den Geber 15. Ebenfalls gezeigt ist eine Stützhülse 17 für die Befestigungsschraube 24 und eine Gewindehülse 18 als Montage- und Transporthilfe.

Um beim Transport des Antriebs oder bei der Montage von Antrieb oder Bremse bei fehlender Befestigung des Stators 1 an der Trägerplatte 3 Beschädigungen von Rotor und Stator zu vermeiden, können für diesen Fall Rotor und Stator über die Gewindehülsen 18 mit Schrauben zueinander fixiert werden.

Als besonders vorteilhaft erweist sich eine gegenüber herkömmlichen Lösungen vereinfachte genaue Positionierung der Permanentmagnete 2a auf dem Rotorkörper 2. Dies liegt darin begründet, daß die Permanentmagnete 2a nicht mehr manuell auf den Rotorkörper 2 aufgeklebt werden müssen, sondern im Rahmen der Herstellung des Kunststoffkörpers an genau vorgegebenen Positionen festlegbar sind.

Es erweist sich ferner als vorteilhaft, (nicht dargestellte) Abtaktwiderstände in dem Kunststoffteil 1 anzuordnen. Abtaktwiderstände dienen, in an sich bekannter Weise, zur elektrischen Vernichtung der durch die Wicklungen erzeugten Bremsenergie. Auch eine (nicht im einzelnen dargestellte) Steuerungselektronik ist in einfacher Weise in das Kunststoffteil 1 einbringbar.

In der dargestellten Ausführungsform ist der Stator 100 elektromagnetisch und der Rotor 200 permanentmagnetisch ausgeführt. Es ist ebenfalls denkbar, sowohl Stator als auch Rotor elektromagnetisch auszuführen. Es ergeben sich bei elektromagnetisch ausgeführtem Rotor durch Eingießen oder Einspritzen von Blechpaketen bzw. Wicklungen in den Rotorkörper die gleichen Vorteile, wie sie bezüglich des Stators 100 beschrieben wurden. Gleiches gilt für eine permanentmagnetische Ausführung des Stators bei elektromagnetischer Ausführung des Rotors.

## Patentansprüche

1. Aufzugantrieb mit einem Stator (100) und einem Rotor (200) und einer mit dem Rotor (200) in drehfester Wirkverbindung stehenden Treib- oder Antriebsscheibe,
**dadurch gekennzeichnet,**
**daß** der Stator (100) und/oder der Rotor (200) wenigstens ein als Statorgehäuse bzw. Rotorkörper dienendes Kunststoffteil (1, 2) aufweist, in welches elektromagnetische oder permanentmagnetische Funktionselemente (la, 2a) des Stators und/oder Rotors wenigstens teilweise, insbesondere vollständig, eingeschlossen sind.

2. Aufzugantrieb nach Anspruch 1, **dadurch gekennzeichnet, daß** der Stator (100) als Funktionselement ein Blechpaket und Wicklungen (1a) aufweist, welche in ein als Statorgehäuse (1) dienendes Kunststoffteil eingebettet sind, und/oder der Rotor (200) Permanentmagnete (2a) und einen Magnetrückschlußring (2b) aufweist, welche in ein als Rotorkörper (2) dienendes Kunststoffteil eingebettet sind.

3. Aufzugantrieb nach einem der Ansprüche 1 oder 2, **gekennzeichnet durch** in die Kunststoffteile mit eingebettete Einlegeteile zur örtlichen Verstärkung.

4. Aufzugantrieb nach einem der vorstehenden Ansprüche, **gekennzeichnet durch** in die Kunststoffteile eingebrachte Mittel zur EMV-Abschirmung.

5. Aufzugantrieb nach einem der vorstehenden Ansprüche, **gekennzeichnet durch** Mittel, insbesondere eine Trägerplatte (3), zu ihrer seitlichen Aufhängung.

6. Aufzugantrieb nach einem der vorstehenden Ansprüche, **dadurch gekennzeichnet, daß** stark belastete Teile, beispielsweise die Trägerplatte (3), die Tragachse (4) und Stützelemente, oder auch die Treibscheibe (10) im wesentlichen aus Metall hergestellt, und Antriebsteile, insbesondere Stator (100) und Rotor (200), im wesentlichen als Kunststoffteile ausgebildet sind.

7. Aufzugantrieb nach einem der vorstehenden Ansprüche, **gekennzeichnet durch** eine an der Maschine angebrachte und/oder in die Kunststoffteile integrierte Leistungselektronik und/oder Abtaktwiderstände und/oder Umrichter.

8. Aufzugantrieb nach Anspruch 5, **dadurch gekennzeichnet, daß** die Treibscheibe (10) direkt benachbart an der Trägerplatte (3) angeordnet und über Lager (5) und die Tragachse (4) abgestützt ist.

9. Aufzugantrieb nach Anspruch 5, **dadurch gekennzeichnet, daß** der Stator (100) durch die Treibscheibe (10) beabstandet über eine drehmomentfeste Abstützung mit der Trägerplatte (3) verbunden ist.

10. Auf zugantrieb nach einem der vorstehenden Ansprüche, **dadurch gekennzeichnet, daß** der Stator (100) über den Rotor (200) geschoben und über Stützelemente, die die Treibscheibe (10) übergreifen, an der Trägerplatte (3) befestigt ist.

11. Aufzugantrieb nach einem der vorstehenden Ansprüche, **dadurch gekennzeichnet, daß** eine Bremse (11) innerhalb der Treibscheibe (10) angeordnet ist und sich insbesondere an der Trägerplatte (3) oder der Tragachse (4) abstützt.

12. Auf zugantrieb nach einem der vorhergehenden Ansprüche, **dadurch gekennzeichnet, daß** zum Transport und/oder zur Montage oder Wartung des Antriebs Rotor (200) und Stator (100) miteinander festlegbar sind.

13. Aufzugantrieb nach Anspruch 10, **dadurch gekennzeichnet, daß** der Stator (100) mit einem Ende über Stützelemente an der Trägerplatte (3) beabstandet abgestützt ist und mit seinem freien Ende den Rotor (200) abstützt und führt.

14. Aufzugantrieb nach einem der vorstehenden.Ansprüche, **dadurch gekennzeichnet, daß** die Kunststoffteile von Stator (100) und/oder Rotor (200) schon farbig herstellbar sind.

## Claims

1. Lift drive, having a stator (100) and a rotor (200) and a traction sheave or drive pulley operatively connected for rotation with the rotor (200), **characterised in that** the stator (100) and/or the rotor (200) has at least one plastics component (1, 2) acting as a stator housing or rotor body, in which electromagnetic or permanently magnetic functional elements (la, 2a) of the stator and/or rotor are at least partly enclosed particularly fully enclosed.

2. Lift drive according to claim 1, **characterised in that** the stator (100) as a functional element comprises a stack of plates and coils (1a) which are embedded in a plastics component acting as the stator housing (1), and/or the rotor (200) comprises permanent magnets (2a) and a magnetic short-circuit ring (2b) which are embedded in a plastics component acting as the rotor body (2).

3. Lift drive according to any one of claims 1 or 2, **characterised by** inlaid parts embedded in the plastics components for local reinforcement.

4. Lift drive according to any one of the preceding claims, **characterised by** means incorporated in the plastics components for EMC screening.

5. Lift drive according to any one of the preceding claims, **characterised by** means, particularly a support plate (3), for suspending it laterally.

6. Lift drive according to any one of the preceding claims, **characterised in that** heavily loaded parts, such as the support plate (3), the support axle (4) and support elements, or the drive pulley (10) are essentially made of metal, and drive components, particularly the stator (100) and rotor (200), are essentially constructed as plastics parts.

7. Lift drive according to any one of the preceding claims, **characterised by** electronic controls and/or cutoff resistors and/or inverters mounted on the machine and/or integrated in the plastics components.

8. Lift drive according to claim 5, **characterised in that** the drive pulley (10) is arranged immediately adjacent to the support plate (3) and is supported on bearings (5) and the support axle (4).

9. Lift drive according to claim 5, **characterised in that** the stator (100) is connected to the support plate via a torque-resistant support, spaced by the drive pulley (10).

10. Lift drive according to any one of the preceding claims, **characterised in that** the stator (100) is slid over the rotor (200) and is secured to the support plate (3) by means of support elements which extend over the drive pulley (10).

11. Lift drive according to any one of the preceding claims, **characterised in that** a brake (11) is provided within the drive pulley (10) and is supported in particular on the support plate (3) or the support axle (4) .

12. Lift drive according to any one of the preceding claims, **characterised in that** for transportation and/or for assembly or maintenance of the drive, the rotor (200) and stator (100) can be fixed together.

13. Lift drive according to claim 10, **characterised in that** the stator (100) is supported at one end on the support plate, spaced therefrom by means of support elements, and with its free end supports and guides the rotor (200).

14. Lift drive according to any one of the preceding claims, **characterised in that** the plastics parts of the stator (100) and/or rotor (200) can be coloured during manufacture.

## Revendications

1. Entraînement pour ascenseur comportant un stator (100) et un rotor (200) et une poulie motrice ou une poulie d'entraînement en liaison active solidaire avec le rotor (200), **caractérisé en ce que** le stator (100) et/ou le rotor (200) présente au moins une partie en matière plastique (1, 2) servant de boîtier de stator ou de corps de rotor, dans lequel des éléments fonctionnels électromagnétiques ou à aimants permanents (la, 2a) du stator et/ou du rotor sont enfermés au moins partiellement, en particulier entièrement.

2. Entraînement pour ascenseur selon la revendication 1, **caractérisé en ce que** le stator (100) présente en tant qu'élément fonctionnel un empilement de tôles et des enroulements (1a) qui sont noyés dans une partie de matière plastique servant de boîtier de stator (1), et/ou le rotor (200) présente des aimants permanents (2a) et une bague de reflux magnétique (2b) qui sont noyés dans une partie en matière plastique servant de corps de rotor (2).

3. Entraînement pour ascenseur selon l'une des revendications 1 ou 2, **caractérisé par** des pièces d'insert noyées dans les parties en matière plastique pour effectuer un renforcement local.

4. Entraînement pour ascenseur selon l'une des revendications précédentes, **caractérisé par** des moyens ménagés dans les parties en matière plastique pour effectuer un blindage CEM.

5. Entraînement pour ascenseur selon l'une des revendications précédentes, **caractérisé par** des moyens, en particulier une plaque support (3) pour sa suspension latérale.

6. Entraînement pour ascenseur selon l'une des revendications précédentes, **caractérisé en ce que** les parties fortement chargées, par exemple la plaque support (3), l'axe portant (4) et des éléments de soutien ou aussi la poulie motrice (10) sont réalisées essentiellement en métal, et des parties d'entraînement, en particulier le stator (100) et le rotor (200) sont essentiellement réalisés en tant que parties en matière plastique.

7. Entraînement pour ascenseur selon l'une des revendications précédentes, **caractérisé par** un système électronique de puissance et/ou des résistances d'achèvement et/ou des convertisseurs montés sur la machine et/ou intégrés dans les parties de matière plastique.

8. Entraînement pour ascenseur selon la revendication 5, **caractérisé en ce que** la poulie motrice (10) est agencée directement au voisinage de la plaque support (3) et soutenue par des paliers (5) et par l'axe portant (4).

9. Entraînement pour ascenseur selon la revendication 5, **caractérisé en ce que** le stator (100) est relié à distance avec la plaque support (3) par la poulie motrice (10) via un soutien résistant à un couple de rotation.

10. Entraînement pour ascenseur selon l'une des revendications précédentes, **caractérisé en ce que** le stator (100) est enfilé sur le rotor (200) et fixé sur la plaque support (3) via des éléments de soutien qui coiffent la poulie motrice (10).

11. Entraînement pour ascenseur selon l'une des revendications précédentes, **caractérisé en ce qu'**un frein (11) est agencé à l'intérieur de la poulie motrice (10) et prend appui en particulier sur la plaque support (3) ou sur l'axe portant (4).

12. Entraînement pour ascenseur selon l'une des revendications précédentes, **caractérisé en ce que** pour le transport et/ou pour le montage ou pour l'entretien de l'entraînement, le rotor (200) et le stator (100) peuvent être immobilisés l'un par rapport à l'autre.

13. Entraînement pour ascenseur selon la revendication 10, **caractérisé en ce que** le stator (100) est soutenu à distance sur la plaque support (3) avec une extrémité via des éléments de soutien et il soutient et guide le rotor (200) avec son extrémité libre.

14. Entraînement pour ascenseur selon l'une des revendications précédentes, **caractérisé en ce que** les parties en matière plastique du stator (100) et/ou du rotor (200) peuvent être déjà réalisées en couleurs.
